# EUROPEAN PATENT APPLICATION

(11) **EP 4 814 335 A1**
(43) Date of publication of application: **30.09.2026**
(21) Application number: 26166788.5
(22) Date of filing: 23.03.2026
(51) Int. Cl.: F16D 65/12, F16B 19/00

(54) **CONNECTING MEANS, IN PARTICULAR BOLTS**

(30) Priority: 28.03.2025 DE 102025112270
(71) Applicant: SAF-HOLLAND GmbH, 63856 Bessenbach (DE)
(72) Inventor: Drewes, Olaf, 63743 Aschaffenburg (DE)
(74) Representative: Müller Schupfner & Partner Patent- und Rechtsanwaltspartnerschaft mbB (Muc)

(57) **Abstract**

The present invention relates to a connecting means (100), in particular a bolt (10), for a brake disc (500), wherein the connecting means (100) has a main direction of extension (310), wherein an outer cross-sectional contour (105) of the connecting means (100) has a receiving section (103a, 103b, 103c, 103d), wherein the receiving section (103a, 103b, 103c, 103d) has a first turning section (111), a second turning section (112) and a first lowering section (121), wherein the first lowering section (121) is arranged between the first turning section (111) and the second turning section (112), and wherein the first lowering section (121) is partially concave in design.

## Description

The invention relates to a connecting means, in particular a bolt, for a brake disc, as well as a brake disc with such a connecting means. The invention also comprises a vehicle having a brake disc and/or a connecting means.

In automotive engineering, alongside the steering system, brake systems are a safety-critical component of vehicles and are subject to high mechanical loads, particularly when used in commercial vehicles. At the same time, brake systems represent a significant economic factor in the operation of vehicles for the vehicle owner and must also comply with a number of legal requirements. As a result of constant cost pressure on the vehicle market, particularly in the commercial vehicle sector, manufacturers of vehicles and vehicle components, such as braking systems, are striving to offer products of better quality at the same price or products of the same quality at lower prices. The costs incurred by a vehicle owner for vehicle maintenance are particularly relevant here, especially in the commercial vehicle sector, where every period of downtime also means a loss of profit.

Currently, there are a variety of different types of brake systems, particularly in the commercial vehicle sector, such as drum brakes and disc brakes. In addition to brake pads, disc brakes feature a brake disc. Brake discs come in a wide variety of designs. For example, a brake disc may have a friction ring and an adapter element. When the brake disc is used in a vehicle, the adapter element is attached on one side to a hub of a vehicle axle so that the adapter element follows the rotational movement of the vehicle wheel or hub. The friction ring and the adapter element are connected to each other for power/torque transmission so that the friction ring follows the movement of the adapter element and vice versa. When the brakes are actuated, the friction ring engages with the brake pads and is decelerated as a result of the frictional forces between the brake pads and the friction ring. The friction ring and the adapter element can usually be connected to each other via bolts for power/torque transmission. In this way, deceleration of the friction ring when the brake pads engage is transmitted to the adapter element and to the vehicle wheel by means of the bolts. The advantage of a multi-piece design of the brake disc may be that, when the friction ring wears out, it can be replaced separately from the adapter element. This reduces maintenance time and costs for vehicle owners.

However, wear of the friction ring does not occur exclusively as a loss of material from the friction ring as a result of the brake pads engaging, but also as a result of cracking and crack growth in the friction ring. The areas of the friction ring around the bolts are susceptible to cracking and crack growth.

It is therefore the object of the present invention to provide a connecting means, in particular between a friction ring and an adapter element, that enables a longer service life of the brake disc.

This object is solved by a connecting means according to claim 1. Further features, advantages, and embodiments are apparent from the dependent claims, the description, and the figures.

According to the invention, a connecting means, in particular a bolt, which in particular has a main direction of extension and/or in particular an outer cross-sectional contour. The outer cross-sectional contour in particular has a receiving section. In particular, the receiving section has a first turning section, in particular a second turning section, and in particular, a first lowering section. In particular, the first lowering section is arranged between the first turning section and the second turning section. In particular, the first lowering section is partially concave in design. The connecting means serves in particular to connect a friction ring of a brake disc to an adapter element of a brake disc.

The connecting means can also be named connecting element.

The design of the connecting means according to the invention means that, in the partially concave section of the first lowering section, relative movement of the connecting means to the surrounding material causes the surrounding material to be compressed into the concave area of the first lowering section.

The connecting means according to the invention can achieve the advantage over the prior art that the service life of a brake disc is increased. This is achieved by a reduction in crack formation and crack propagation due to the shape of the connecting means according to the invention. The shape of the connecting means according to the invention reduces, in the event of forces occurring, the separation of the material surrounding the connecting means around the connecting means compared to a bolt with a round cross-section and also leads to a sectional compression of the surrounding material.

Alternatively or additionally, a larger shear surface can also be provided by the design according to the invention, so that the contact surfaces are relieved. This circumstance also leads to a more reliable design.

Another aspect of the invention relates to a use of the connecting means in a brake disc, in particular to connect the friction ring to the adapter element of this brake disc, preferably to reduce cracks in the brake disc. If the connecting means is used in a brake disc to connect a friction ring to an adapter element, the braking force or braking torque is preferably transmitted between the friction ring and the adapter element by means of the connecting means. During braking, the friction ring is pressed against the connecting means. Bolts with a round cross-section are commonly used as connecting means. However, due to the round cross-section, this results in a high concentration of force on a surface section and thus high surface pressure. Furthermore, the round geometry of the cross-section of a conventional bolt causes the material of the friction ring to shear along the surface of the connecting means and promotes crack formation in the friction ring. In addition, this shearing motion occurs in close proximity to the points on the surface of the connecting means where the greatest surface pressure occurs. Compared to conventional round connecting means for connecting the friction ring to the adapter element, the connecting means according to the invention has an enlarged surface area. With the same force applied to the friction ring on the connecting means, this results in a lower surface pressure on the connecting means over a larger surface area. Thus, the connecting means according to the invention reduces crack formation and crack propagation. Furthermore, the partially concave section of the first lowering section causes the material of the friction ring to move toward each other during a braking process. This means that shearing movement at the point of possible maximum surface pressure is at least greatly reduced or avoided and, in most cases, the material of the friction ring is actually compressed at this point. The partially concave geometric design of the connecting means thus reduces crack formation and crack propagation.

A brake disc according to the invention may have a friction ring and an adapter element. When the brake disc is used in a vehicle, in particular in a commercial vehicle, the adapter element is fastened on one side to a hub of a vehicle axle so that the adapter element follows the rotational movement of the vehicle wheel or hub. The friction ring and the adapter element of the brake disc are connected to each other for force transmission, so that the friction ring follows the movement of the adapter element and vice versa. This connection can, preferable exclusively by the connecting means according to the invention, be made in particular by means of a connecting means according to the invention. When the brakes of the vehicle are applied (braking), the friction ring is in engagement and/or in contact with the brake pads and is decelerated as a result of the frictional forces between the brake pads and the friction ring. In particular, the brake pads have friction pads which are designed to dissipate kinetic energy, in particular rotational energy of the friction ring, into heat when in direct frictional contact with the friction ring. The friction ring preferably has two friction surfaces that are parallel to each other and/or ringshaped, which come into contact with the brake pads during braking. The adapter element, on the other hand, serves to attach the brake disc to the axle or a hub. Advantageously, the adapter element has mounting openings, in particular through-holes.

In particular, a vehicle means a land vehicle, preferably a road vehicle, and particularly preferably a commercial vehicle. A commercial vehicle within the meaning of the invention is, in particular, a vehicle which has a permissible total weight of more than 3.5 t, preferably more than 7.5 t, particularly preferably more than 15 t, and particularly strongly preferably more than 18 t. The commercial vehicle may be a trailer, in particular a semi-trailer, and/or a towed vehicle. The commercial vehicle is, in particular, a roadworthy and/or road-bound vehicle.

In particular, a main direction of extension means a direction along the largest dimension of a connecting means.

Preferably, the first lowering section is directly adjacent to the first turning section and/or the second turning section. Thus, there are no further shapes along the outer cross-sectional contour between the first lowering section and the first turning section and/or the second turning section. An advantage of this embodiment may be that it results in the simplest possible geometric shape of the connecting means.

It is particularly preferred that the first lowering section is designed to be completely concave. An advantage of this embodiment may be that the connecting means thus has a particularly large concave area and, as already described above, a larger area of the material surrounding the connecting means is compressed. This further reduces the tendency for cracks to form and/or widen.

Advantageously, the first turning section is partially or completely convex. Alternatively or additionally, the second turning section is partially or completely convex. An advantage of this embodiment may be that the surface area of the connecting means improves for the same mass, i.e., the surface area to volume ratio. This leads to a reduction in surface pressure and thus reduces the risk of crack formation and crack propagation.

The connecting means designed as a combination of the previous three embodiments is particularly advantageous. Thus, a concave area of the first lowering section is immediately followed by a convex area of the first turning section and/or the second turning section. One advantage of this embodiment may be that the immediate connection of a convex contour to the surface of the receiving section makes it even larger and results in lower surface pressure. This reduces the risk of crack formation and crack growth in the material surrounding the connecting means.

In a further embodiment, the first lowering section adjoins the first turning section continuously, in particular without a kink. Alternatively or additionally, the first lowering section adjoins the second turning section continuously, in particular without a kink. An advantage of this embodiment may be that a smooth transition between the concave shape of the first lowering section and the convex shape of the first turning section and/or the second turning section is achieved. This further prevents sharp edges or corners, which promote crack formation and crack growth in the material surrounding the connecting means.

The first lowering section is preferably designed as a partially or completely rounded shape, in particular as an elliptical shape. An advantage of this embodiment may be that the rounded shape of the first lowering section achieves an even distribution of pressure between the connecting means and the material surrounding the connecting means on the surface of the connecting means. This further reduces the risk of crack formation and crack growth in the material surrounding the connecting means. A further advantage of this embodiment may be that there are no edges in the concave area of the first lowering section. This reduces stress peaks in the surface pressure of the connecting means, thereby inhibiting crack formation and crack growth in the material surrounding the connecting means.

It is particularly preferred that the first lowering section is designed as a partial circle section, in particular as a quarter circle section, and has a first lowering section radius. An advantage of this embodiment may be that the simple geometry results in lower manufacturing costs for the connecting means. A further advantage of this embodiment may be that any pressure occurring between the connecting means and the surrounding material is distributed particularly evenly over the contour of the first lowering section. This results in a particularly even surface pressure in the first lowering section, which significantly reduces the risk of crack formation and crack growth in the material surrounding the connecting means.

Advantageously, the first turning section is designed as a partially or completely rounded shape, in particular as an elliptical shape. An advantage of this embodiment may be that the rounded shape of the first turning section achieves an even distribution of pressure between the connecting means and the material surrounding the connecting means on the surface of the connecting means. This further reduces crack formation and crack growth in the material surrounding the connecting means. A further advantage of this embodiment may be that there are no edges in the convex area of the first turning section. This reduces stress peaks in the surface pressure of the connecting means, thereby reducing crack formation and crack growth.

Alternatively and/or additionally, the second turning section is designed as a partially or completely rounded shape, in particular as an elliptical shape. An advantage of this embodiment may be that the rounded shape of the second turning section achieves an even distribution of pressure between the connecting means and the material surrounding the connecting means on the surface of the connecting means. This further reduces crack formation and crack growth in the material surrounding the connecting means. Furthermore, an advantage of this embodiment may be that there are no edges in the convex area of the second turning section. This reduces stress peaks in the surface pressure between the connecting means and the material surrounding the connecting means, thereby reducing crack formation and crack growth.

It is particularly advantageous if the first turning section is designed as a partial circle section, in particular as a semicircle section, with a first turning section radius. An advantage of this embodiment may be that the simple geometry allows the connecting means to be manufactured at low cost. A further advantage of this embodiment may be that any pressure occurring between the connecting means and the surrounding material is distributed particularly evenly over the contour of the first turning section. This results in a particularly even surface pressure in the first turning section, which significantly reduces the risk of crack formation and crack growth in the material surrounding the connecting means.

Alternatively and/or additionally, the second turning section can be designed as a partial circle section, in particular as a semicircle section, with a second turning section radius. An advantage of this embodiment can be that the simple geometry results in lower manufacturing costs for the connecting means. A further advantage of this embodiment may be that any pressure occurring between the connecting means and the surrounding material is distributed particularly evenly over the contour of the second turning section. This results in a particularly even surface pressure in the second turning section, which significantly reduces the risk of crack formation and crack growth.

In another advantageous or additional embodiment, the first turning section radius corresponds to the second turning section radius. An advantage of this embodiment may be that the first turning section and the second turning section thus have the same geometric shape. This results in a particularly even distribution of forces over the entire surface of the receiving section. This design reduces stress peaks in the surface pressure. This reduces the tendency for cracks to form and grow in the material surrounding the connecting means. It can also reduce the bending stress on the connecting means.

Advantageously, the radius of the first lowering section is greater than or equal to the radius of the first turning section and/or the radius of the second turning section. An advantage of this embodiment may be that there is a particularly large concave area along the outer cross-sectional contour of the connecting means in the receiving section. This causes a particularly large portion of the material surrounding the connecting means to be pressed into the concave contour. This reduces the risk of crack formation and crack growth in the material surrounding the connecting means.

In a further embodiment, all turning points are evenly spaced from each other. An advantage of this embodiment may be that it results in a simpler geometric shape. This ensures a more even distribution of the load over the circumference of the connecting means. A further advantage of this embodiment may be that the effort required to insert the connecting means, e.g., into a friction ring, is reduced, since the alignment of the connecting means is less important.

In a further embodiment, the outer cross-sectional contour lies in a plane to which the main direction of extension is normal. An advantage of this embodiment may be that it results in a particularly simple implementation of the outer cross-sectional contour.

In a further preferred embodiment of the invention and/or additionally, the connecting means is designed to be mirror-symmetrical to a plane of symmetry. An advantage of this embodiment may be that it results in a particularly simple geometric shape of the connecting means. This reduces the manufacturing costs of the connecting means. Furthermore, an advantage of this embodiment may be that the effort required to insert the connecting means, e.g., into a friction ring, is reduced, since the alignment of the connecting means is less relevant as a result of the symmetry.

Preferably, the plane of symmetry is defined by the main direction of extension and a first normal to the main direction of extension. An advantage of this embodiment may be that it results in a simple geometric shape of the connecting means. This reduces the manufacturing costs of the connecting means.

It is particularly preferred that the connecting means is designed to be mirror-symmetrical to a second plane of symmetry, wherein the second plane of symmetry is different from the first plane of symmetry. An advantage of this embodiment may be that it results in a particularly simple geometric shape of the connecting means. This reduces the manufacturing costs of the connecting means. A further advantage of this embodiment may be that the effort required to insert the connecting means, e.g., into a friction ring, is reduced, since the alignment of the connecting means is less relevant as a result of the symmetry.

The second plane of symmetry is particularly preferred, spanned by the main direction of extension and a second normal to the main direction of extension . An advantage of this embodiment may be that it results in a simple geometric shape of the connecting means. This reduces the manufacturing costs of the connecting means.

It is particularly preferable for the first normal and the second normal to be arranged orthogonally to each other, so that the first plane of symmetry and the second plane of symmetry are aligned orthogonally to each other. An advantage of this embodiment may be that the first plane of symmetry and the second plane of symmetry allow a complex geometry of the connecting means to be produced in a simple manner. A further advantage of this embodiment may be that the effort required to insert the connecting means, e.g., into a friction ring, is reduced, since the alignment of the connecting means is less relevant.

Advantageously, the connecting means has a further receiving section. In particular, the receiving section and the further receiving section are designed to be mirror-symmetrical to each other with respect to the second plane of symmetry. In particular, the receiving section and the second receiving section are connected to each other via a first straight connecting section and a second straight connecting section. In particular, the first straight connecting section and the second straight connecting section are arranged mirror-symmetrically to each other with respect to the first plane of symmetry. An advantage of this embodiment may be that it has a particularly low surface pressure.

It is particularly preferred that the connecting means is designed to be axially symmetrical. An advantage of this embodiment may be that even complex geometries can be created particularly easily. A further advantage of this embodiment may be that it results in a more even distribution of pressure between the connecting means and the material surrounding the connecting means. This reduces stress peaks in the surface pressure. This reduces the risk of crack formation and crack growth in the material surrounding the connecting means.

Advantageously, the multiple receiving sections that are flush with each other are arranged at different angles to each other so that the concave sections of the receiving sections are oriented in different directions. An advantage of this embodiment may be that it provides multiple concave lowering sections. The multiple lowering sections allow pressure between the connecting means and the material surrounding the connecting means to be distributed across multiple concave sections. This increases the surface-to-volume ratio of the connecting means and thus reduces the surface pressure of the connecting means. This reduces the risk of crack formation and crack growth. A further advantage of this embodiment may be that, due to the multiple concave lowering sections, even when pressure is applied between the connecting means and the material surrounding the connecting means, the material surrounding the connecting means is pressed into a concave section of the connecting means. This prevents the material surrounding the connecting means from being sheared apart and also causes the material surrounding the connecting means to be compressed in the concave section. This reduces the risk of crack formation and crack growth in the material surrounding the connecting means.

Preferably, two adjacent receiving sections share the same turning section. An advantage of this embodiment may be that the number of turning sections is reduced and the ratio of lowering sections to turning sections is increased. Thus, the outer cross-sectional contour of the connecting means comprises more concave and fewer convex areas. This further ensures a good surface-to-volume ratio. In addition, the relatively increased number of concave areas of the outer cross-sectional contour reduces the mass of the material surrounding the connecting means, which is compressed in a concave area during pressing. This reduces the risk of crack formation and crack growth in the material surrounding the connecting means while maintaining the same surface-to-volume ratio of the connecting means.

It is particularly preferable for the connecting means to be solid and/or designed as a hollow profile. One advantage of this embodiment may be that a solid construction allows the connecting means to bear a higher load. Another advantage of this embodiment may be that the hollow profile design of the connecting means achieves a particularly low ratio of load-bearing capacity to weight of the connecting means.

Advantageously, the connecting means is made of iron and/or steel and/or plastic. An advantage of this embodiment may be that complex shapes can be easily produced while at the same time achieving a high load-bearing capacity of the connecting means. The advantage of iron and especially steel lies in their high mechanical strength. It is also possible to achieve a coefficient of thermal expansion that is the same or at least similar to that of the components to be connected, in particular the friction ring and the adapter element.

The connecting means preferably has a thread. An advantage of this embodiment may be that the connecting means can be partially screwed into the surrounding material, such as a friction ring or an adapter element. This allows a detachable connection of the connecting means to the surrounding material, such as a friction ring and/or an adapter element.

It is particularly preferred that the connecting means has a first thread at a first end of the connecting means in the main direction of extension and/or a second thread at a second end of the connecting means opposite the first end in the main direction of extension. An advantage of this embodiment may be that the connecting means can be connected particularly easily and detachably to the surrounding material, such as a friction ring and/or an adapter element.

Preferably, the outer cross-sectional contour has a constant cross-section in a first fastening area and/or a second fastening area along the main direction of extension. In particular, the outer contour or outer cross-sectional contour described above and below and/or the receiving section or receiving sections are formed in the area with a constant cross-section. An advantage of this embodiment can be seen in the reduced manufacturing cost of the connecting means. Furthermore, an advantage of this embodiment can be that, when pressure occurs between the connecting means and the material surrounding the connecting means, a more uniform surface pressure occurs on the connecting means along the main direction of extension. This reduces stress peaks in the surface pressure along the main direction of extension and leads to a reduction in the risk of crack formation and crack growth.

Advantageously, the connecting means has a first insertion curve with a first insertion curve radius at a first end in its main direction of extension. In particular, the connecting means has a second insertion curve with a second insertion curve radius at a second end opposite the first end in the main direction of extension. In particular, the first insertion radius and the second insertion radius correspond to each other. An advantage of this embodiment may be that insertion of the connecting means into the friction ring and/or the adapter element is simplified.

It is particularly preferred that the first fastening section and/or the second fastening section extend over 50%, in particular over 75%, in particular 90%, of the total length of the connecting means in the main direction of extension. An advantage of this embodiment may be that an increase in the area in which a more uniform distribution of surface pressure occurs leads to a reduction in stress peaks of the surface pressure over a larger area of the outer contour of the connecting means.

It is particularly preferred that the first outer cross-sectional contour has a constant cross-section over the entire length of the connecting means in the main direction of extension. An advantage of this embodiment may be that the connecting means has low manufacturing costs. Thus, the embodiment has particularly low manufacturing costs. A further advantage of this embodiment may be that maximizing the area in which a more even distribution of surface pressure occurs leads to a reduction in surface pressure peaks over a larger area of the outer contour of the connecting means, in particular along the main direction of extension.

Furthermore, the invention relates to a brake disc for a vehicle, in particular for a commercial vehicle. In particular, the brake disc has a friction ring. In particular, the brake disc has an adapter element. In particular, the brake disc has a connecting element, preferably according to one of the preceding embodiments. In particular, the friction ring is connected to the adapter element by means of one or more connecting means in a force-fitting and/or form-fitting and/or material-fitting manner. An advantage of this embodiment may be that a particularly uniform transfer of force between the friction ring and the adapter element is achieved by means of the connecting element. Furthermore, the brake disc can have all the advantages of the respective embodiment of the connecting means. Thus, an advantage of this embodiment of the brake disc can be that the risk of crack formation and crack growth in both the friction ring and the adapter element is reduced. Furthermore, an advantage of this embodiment may be that the service life is increased under the same load on the friction ring and/or the adapter element. Furthermore, an advantage of this embodiment of the brake disc may be that the possible load capacity of the brake disc and/or the adapter element is increased until crack formation and/or crack growth occurs.

Preferably, the connecting means is screwed into the friction ring and/or the adapter element. An advantage of this embodiment may be that the connecting means can be connected to the friction ring and/or the adapter element in a single step. Furthermore, an advantage of this embodiment may be that the connection between the connecting means and the friction ring and/or the adapter element is detachable.

It is preferred that the connecting means is pressed into the friction ring and/or the adapter element. An advantage of this embodiment may be that the connecting means can be connected to the friction ring and/or the adapter element in a single step. A further advantage of this embodiment may be that the probability of unintentional loosening of the connection between the connecting element and the friction ring and/or the adapter element is reduced. A further advantage of this embodiment may be that the connection between the connecting means and the friction ring and/or the adapter element is detachable.

Preferably, the connecting means is cast into the friction ring and/or the adapter element. One advantage of this embodiment may be that no further work step is required to connect the connecting means to the friction ring and/or the adapter element, since the connecting means is cast in during the manufacturing process of the friction disc and/or the adapter element. This reduces the manufacturing cost of the brake disc.

It is particularly preferred that a main direction of extension of the connecting element corresponds to a radial direction of the brake disc. Alternatively and/or additionally, a first normal of the connecting element corresponds to a tangential direction of the brake disc. Alternatively and/or additionally, a second normal of the connecting element is aligned parallel to an axis of rotation of the brake disc. An advantage of this embodiment may be that when a force is applied to the friction ring, for example by brake pads, pressure occurs between the material of the friction ring and/or the adapter element, normal to the surface of the connecting element. This reduces a proportional conversion of the braking force occurring on the friction ring into a tangential force along the main direction of extension of the connecting element. Such a tangential force along the main direction of extension of the connecting element can lead to the connecting element being pulled out of the friction ring and/or the adapter element. This in turn can lead to a reduction in the surface area of the connecting element partially enclosed by the friction ring and/or adapter element, thereby increasing the surface pressure occurring on the connecting means while maintaining the same pressure between the friction ring and the connecting element.

Advantageously, the connecting element is aligned such that a direction of rotation of the brake disc during forward travel of a vehicle to which the brake disc is attached forms a normal to a concave portion of the first lowering section. An advantage of this embodiment may be that, during braking, the material of the friction ring is pressed into at least a section of the concave area of the first lowering section. This reduces shearing movement of the friction ring material along the concave area of the first lowering section and also causes the friction ring material to be compressed in the area of the first lowering section. Both effects reduce the risk of crack formation and crack growth in the friction ring and/or in the adapter element.

It is particularly advantageous if the connecting means is aligned such that the direction of rotation of the brake disc when a vehicle to which the brake disc is attached is traveling forward is normal to a concave section of the first lowering section which is closest to a center of the cross-sectional area of the connecting means. An advantage of this embodiment may be that a particularly large portion of the material of the friction ring and/or the adapter element is pressed into the concave shape of the first lowering section. This reduces the risk of crack formation and crack growth in the friction ring and/or the adapter element for a particularly large area of the friction ring and/or the adapter element around the connecting means.

Advantageously, the friction ring has at least a plurality of connecting recesses. The connecting recesses are designed to accommodate the connecting means in the friction ring. At least one connecting recess has an insertion section; in particular, each connecting recess has an insertion section. The insertion section or sections of the friction ring form, in particular, the distal end of the connecting recesses. In particular, the insertion section is designed as an insertion chamfer. Alternatively or additionally, the insertion section is designed as an insertion curve with a friction ring curve radius. An insertion chamfer and/or an insertion curve simplify insertion of the connecting means into the friction ring and centering of the connecting means when inserting the connecting means into the friction ring. Due to the design of the insertion section as an insertion curve, the insertion section has a curve with a constant friction ring curve radius. This design can have the advantageous effect of reducing the notch effect.

Furthermore, the invention relates to a vehicle, in particular a commercial vehicle, comprising in particular a brake disc according to one of the preceding or following embodiments and/or in particular a connecting means according to one of the preceding or following embodiments. The embodiment may have the respective advantages depending on the embodiment of the brake disc and/or the embodiment of the connecting means. Furthermore, an advantage of this embodiment of the vehicle, in particular the commercial vehicle, may be that the reduced risk of crack formation and crack growth results in an extension of the service life of the brake disc. This reduces the maintenance costs for a vehicle owner of a vehicle according to this embodiment. Furthermore, the running costs are reduced by the maintenance of the brake disc. This is a particularly significant factor for commercial vehicle owners. Another advantage of this embodiment may be that it is still not necessary to replace the entire brake disc. Instead, thanks to the connecting means, the friction ring can be detached from the adapter element without causing damage. This reduces maintenance work and maintenance costs for vehicle owners.

In particular, a vehicle according to the invention is a land vehicle, preferably a road vehicle, and particularly preferably a commercial vehicle. In particular, a commercial vehicle means a vehicle with a gross vehicle weight rating greater than 3.5 tons, preferably greater than 7.5 tons, and particularly preferably greater than 15 tons. The vehicle is preferably a trailer.

Furthermore, the invention features the use of a connecting means according to one of the preceding embodiments for connecting a friction ring of a brake disc to an adapter element of the brake disc. An advantage of this embodiment may be that such use of the connecting means has all the advantages of the respective embodiment of the connecting means.

### Brief description of the figures:

Further advantages and features of the present invention are apparent from the following description with reference to the figures. Individual features of the embodiments shown may also be used in other embodiments, unless expressly excluded. Shown are:
- Figure 1: a schematic representation of a bolt according to the prior art in a friction ring,
- Figure 2: a schematic representation of a connecting means according to a first embodiment of the invention,
- Figure 3: a schematic representation of the connecting means according to the first embodiment of the invention,
- Figure 4: a schematic representation of a connecting means according to a second embodiment of the invention,
- Figure 5: a schematic representation of the connecting means according to the second embodiment of the invention,
- Figure 6: a schematic representation of a brake disc according to an embodiment of the invention, and
- Figure 7: a schematic representation of an insertion section of the friction ring according to one of the embodiments of the invention.

### Figure description:

Preferably, all elements, units, and/or assemblies in all figures have the same reference signs.

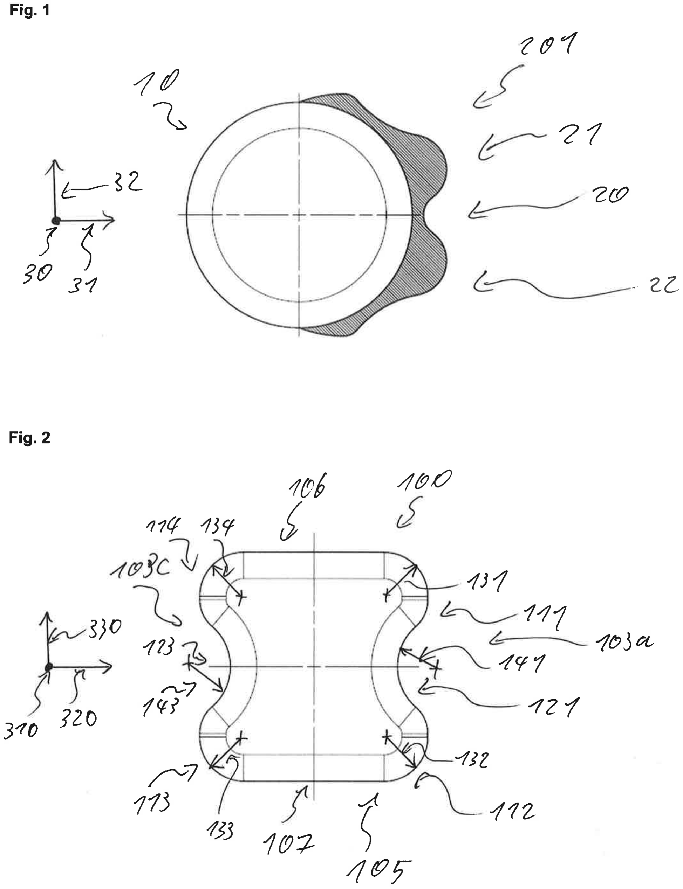

**Figure 1** shows a schematic representation of a bolt 10 according to the prior art in a friction ring 201 according to the prior art. The bolt 10 is arranged within a friction ring 201. The bolt 10 is designed to be rotationally symmetrical. The bolt 10 has a main direction of extension 30. The bolt 10 has a constant cross-sectional profile along the main direction of extension 30. The bolt 10 thus has a cylindrical outer contour. The bolt 10 is completely enclosed by the material of the friction ring 200 in the plane shown.

In the shown plane of the section through the friction ring 201 with the bolt 10 according to the prior art, the radial extension of the friction ring 201 extends normally to the section through the friction ring 201. The main direction of extension 30 of the bolt 10 corresponds to the radial direction of the friction ring 201. The extension of the section through the friction ring 201 from the right to the left side of the schematic representation in Fig. 1 corresponds to the tangential extension 31 of the friction ring 201. The extension of the section through the friction ring 201 from the top to the bottom of the schematic representation in Fig. 1 corresponds to the axial extension 32 of the friction ring 200.

The friction ring 201 is part of a brake disc that is not shown in detail. In addition to the friction ring 201, the brake disc has an adapter element that is not shown. The brake disc is part of a disc brake that is not shown in detail. The adapter element is attached to the hub of a wheel and follows the movement of the wheel. The bolt 10 is connected to both the friction ring 201 and the adapter element so that the friction ring 201 follows the movement of the adapter element. When braking, the brake pads of the disc brake engage axially with the friction ring 201. This leads to a reduction in the rotational movement of the friction ring 201 in the tangential direction 31. The braking force is transmitted between the friction ring 201 and the adapter element on the wheel via the bolt 10. This causes the friction ring 201 to press against the surface of the bolt 10 in the tangential direction 31. The pressure that occurs is distributed over the surface of the bolt 10 aligned in the tangential direction 31. This creates a surface pressure 20 on the surface of the bolt 10 aligned in the tangential direction 31. The surface pressure 20 that occurs is shown in Fig. 1 as a gray area, which is located directly on the circumference of the bolt 10. The distance of the contour of the gray area reflects an amplitude of the surface pressure 20 of the underlying section of the surface of the bolt 10. As can be seen in Fig. 1, the surface pressure occurs unevenly and has two stress peaks 21, 22.

As the surface pressure 20 increases, the risk of crack formation and crack growth in the friction ring 201 and/or in the adapter element increases. Furthermore, stress peaks 21, 22 in the surface pressure 20 increase the risk of crack formation and crack growth in the friction ring 201 and/or the adapter element. In addition, the round convex shape promotes a shearing movement of the material of the friction ring 200 tangential to the surface of the bolt 10. In particular, the fact that the bolt 10 is circular in design according to the prior art means that the lowest possible surface-to-volume ratio is achieved, so that the pressure between the friction ring 201 and the bolt 10 is distributed over the smallest possible surface area of the bolt 10. Thus, the shape of the bolt 10 causes both the highest possible surface pressure 20, with stress peaks 21, 22 occurring, and a shearing movement of the material of the friction ring 201 in the vicinity of the stress peaks 21, 22.

**Figure 2** shows a schematic representation of a connecting means 100 according to a first embodiment of the invention. The connecting means 100 has a main direction of extension 310. The connecting means 100 has an outer cross-sectional contour 105. The outer cross-sectional contour 105 of the connecting means 100 has a first receiving section 103a and a further receiving section. The further receiving section is identical to a third receiving section 103c. The first receiving section 103a has a first turning section 111, a second turning section 112, and a first lowering section 121. The first lowering section 121 is arranged between the first turning section 111 and the second turning section 112. The first lowering section 121 is completely concave in design. The first turning section 111 and the second turning section 112 are completely convex in design. The first lowering section 121 merges smoothly and without kinks into the first lowering section 111. The first lowering section 121 connects smoothly and without kinks to the second turning section 112. The first lowering section 121 is designed as a quarter circle section.

The first lowering section 121 has a first lowering section radius 141. The first turning section 111 has a first turning section radius 131. The second turning section 112 has a second turning section radius 132.

The third receiving section 103c has a third turning section 113, a fourth turning section 114, and a third lowering section 123. The third lowering section 123 is arranged between the third turning section 113 and the fourth turning section 114. The third lowering section 123 is designed to be completely concave. The third turning section 113 and the fourth turning section 114 are designed to be completely convex. The third lowering section 123 merges smoothly and without kinks into the third lowering section 113. The third lowering section 123 connects smoothly and without kinks to the fourth turning section 114. The third lowering section 123 is designed as a quarter circle section. The third lowering section 123 has a third lowering section radius 143. The third turning section 113 has a third turning section radius 133. The fourth turning section 114 has a fourth turning section radius 134.

The first turning section radius 131, the second first turning section radius 132, the third turning section radius 133, and the fourth turning section radius 134 correspond to each other. The first lowering section radius 141 and the third lowering section radius 143 correspond to each other. The first lowering section radius 141 is larger, in particular twice as large, as the first turning section radius 131 and the second turning section radius 132. The first turning section 111 and third turning section 113 are evenly spaced from each other.

The connecting means 100 is designed to be mirror-symmetrical to a first plane of symmetry. The first plane of symmetry is spanned by the main direction of extension 310 and a first normal 320 to the main direction of extension 310. The connecting means 100 is also designed to be mirror-symmetrical to a second plane of symmetry, wherein the second plane of symmetry is different from the first plane of symmetry. The second plane of symmetry is spanned by the main direction of extension 310 and a second normal 330 to the main direction of extension 310. The first normal 320 and the second normal 330 are arranged orthogonally to each other, so that the first plane of symmetry and the second plane of symmetry are arranged orthogonally to each other. The outer cross-sectional contour 105 of the connecting means 100 lies in a plane to which the main direction of extension 310 is normal.

The fourth turning section 114 and the first turning section 111 are connected to each other via a first connecting section 106. The first connecting section 106 is straight along its entire length. The second turning section 112 and the third turning section 113 are connected to each other via a second connecting section 107. The second connecting section 107 is straight along its entire length. The first connecting section 106 and the second connecting section 107 are designed to be mirror-symmetrical to each other with respect to the first plane of symmetry.

This design of the connecting means 100 leads to a number of unexpected advantages with regard to crack formation and crack growth in the material of the friction ring 200. On the one hand, the concave and convex design of the outer cross-sectional contour 105 of the connecting element 100 leads to an increase in the surface area of the connecting element 100 with the same amount of material used, i.e., a better surface-to-volume ratio of the connecting means 100. Thus, the connecting element 100 has a larger surface area in the tangential direction of the friction ring 200 than a circular bolt 10. When pressure occurs between the friction ring 200 and the connecting element 100, the pressure is distributed over a larger surface area of the connecting element 100. This results in a lower surface pressure 40. This reduces the risk of crack formation and crack growth in the friction ring 200.

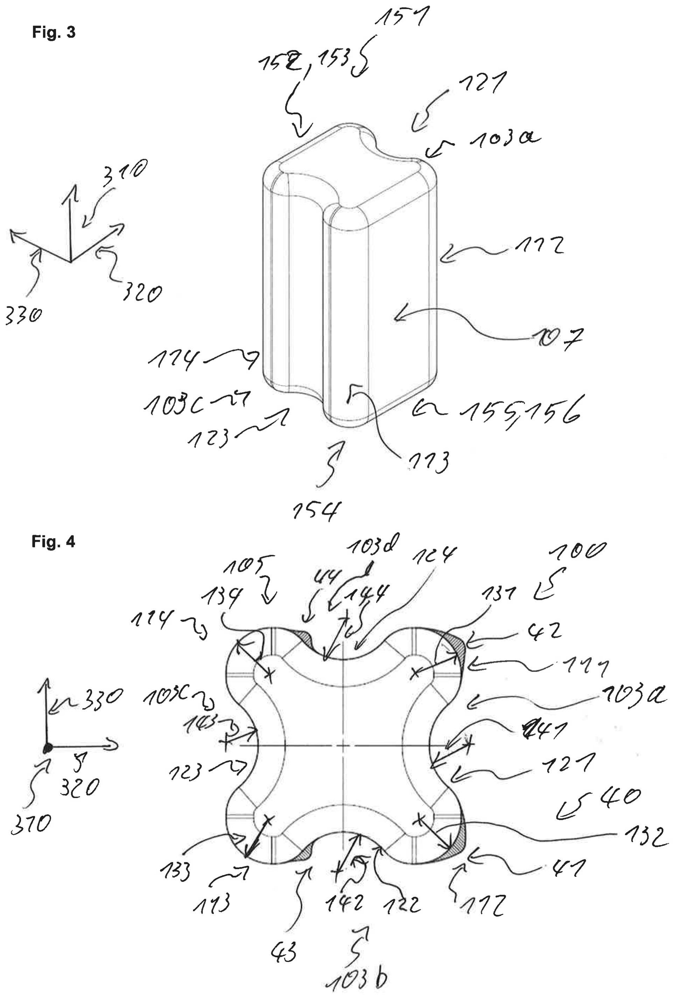

**Figure 3** shows a schematic view of the connecting means 100 according to the first embodiment of the invention. The connecting means 100 is shown freestanding. The outer cross-sectional contour 105 has a constant cross-section over the entire length of the connecting means 100 in the main direction of extension 310. The connecting means 100 has a first insertion curve 152 with a first insertion curve radius 153 at a first end 151 in its main direction of extension 310. In particular, the connecting means 100 has a second insertion radius 155 with a second insertion radius 156 at a second end 154 opposite the first end 151 in the main direction of extension 310. In particular, the first insertion radius 153 and the second insertion radius 156 correspond to each other. An advantage of this embodiment may be that it simplifies insertion of the connecting means 100 into the friction ring 200 and/or the adapter element 400.

**Figure 4** shows a schematic representation of a connecting means 100 in a friction ring 200 according to a second embodiment of the invention.

The connecting means 100 according to the second embodiment has similar characteristics to the connecting means 100 according to the second embodiment. The connecting means 100 has a main direction of extension 310. The connecting means 100 has an outer cross-sectional contour 105. The outer cross-sectional contour 105 of the connecting means 100 has a first receiving section 103a, a second receiving section 103b, a third receiving section 103c, and a fourth receiving section 103d. The first receiving section 103a has a first turning section 111, a second turning section 112, and a first lowering section 121. The first lowering section 121 is arranged between the first turning section 111 and the second turning section 112. The first lowering section 121 is designed to be completely concave. The first turning section 111 and the second turning section 112 are designed to be completely convex in design. The first lowering section 121 merges smoothly and without kinks into the first turning section 111. The first lowering section 121 merges smoothly and without kinks into the second turning section 112. The first lowering section 121 is designed as a quarter circle section. The first lowering section 121 has a first lowering section radius 141. The first turning section 111 is designed as a semicircular section with a first turning section radius 131. The second turning section 112 is designed as a semicircular section with a second turning section radius 132.

The connecting means 100 is designed to be mirror-symmetrical to a first plane of symmetry. The first plane of symmetry is defined by the main direction of extension 310 and a first normal 320 to the main direction of extension 310. The connecting means 100 is also designed to be mirror-symmetrical to a second plane of symmetry, wherein the second plane of symmetry is different from the first plane of symmetry. The second plane of symmetry is spanned by the main direction of extension 310 and a second normal 330 to the main direction of extension 310. The first normal 320 and the second normal 330 are arranged orthogonally to each other, so that the first plane of symmetry and the second plane of symmetry are arranged orthogonally to each other.

The outer cross-sectional contour 105 of the connecting means 100 lies in a plane to which the main direction of extension 310 is normal.

The outer cross-sectional contour 105 has four receiving sections 103a, 103b, 103c, 103d that are flush with each other. Two adjacent receiving sections 103a, 103b, 103c, 103d each share the same turning section 111, 112, 113, 114.

Thus, the outer cross-sectional contour 105 has a third turning section 113 and a fourth turning section 114. The third turning section 113 is concave in shape. The fourth turning section 114 is also concave in shape. The third turning section 113 is designed as a semicircular section with a third turning section radius 133. The fourth turning section 114 is designed as a semicircular section with a fourth turning section radius 134.

The outer cross-sectional contour 105 has a second lowering section 122, a third lowering section 123, and a fourth lowering section 124. The second lowering section 122, the third lowering section 123, and the fourth lowering section 124 are each designed to be completely concave. The second lowering section 122 is designed as a quarter circle section with a second lowering section radius 142. The third lowering section 123 is designed as a quarter circle section with a third lowering section radius 143. The fourth lowering section 124 is designed as a quarter circle section with a fourth lowering section radius 144. The second lowering section 122 connects directly to the second turning section 112 and the third turning section 113. The third lowering section 123 connects directly to the third turning section 113 and the fourth turning section 114. The fourth lowering section 124 connects directly to the fourth turning section 114 and the first turning section 111.

The second lowering section 112 connects smoothly without a kink to the second turning section 112 and the third turning section 113. The third lowering section 123 connects smoothly without a kink to the third turning section 113 and the fourth turning section 114. The fourth lowering section 124 connects smoothly without a kink to the fourth turning section 114 and the first turning section 111.

The first turning section radius 131, the second turning section radius 132, the third turning section radius 133, and the fourth turning section radius 134 correspond to each other. The first lowering section radius 141, the second lowering section radius 142, the third lowering section radius 143, and the fourth lowering section radius 144 correspond to each other. The first lowering section radius 141 is larger, in particular twice as large, as the first turning section radius 131. The first turning section 111, the second turning section 112, the third turning section 113, and the fourth turning section 114 are evenly spaced from each other.

This design of the connecting means 100 leads to a number of unexpected advantages with regard to crack formation and crack growth in the material of the friction ring 200. On the one hand, the concave and convex design of the outer cross-sectional contour of the connecting element 100 leads to an increase in the surface area of the connecting element 100 with the same amount of material used, i.e., a better surface-to-volume ratio of the connecting means 100. Thus, the connecting element 100 has an enlarged surface in the tangential direction of the friction ring 200 compared to a circular bolt 10. When pressure occurs between the friction ring 200 and the connecting element 100, the pressure is distributed over a larger surface area 40 of the connecting element 100. This results in a lower surface pressure 40. This reduces the risk of crack formation and crack growth in the friction ring 200.

Furthermore, as a result of the concave shape along the outer cross-sectional contour of the connecting element 100 and the alignment of the concave shape of the outer cross-sectional contour of the connecting element 100 relative to the friction ring 200, a section of the material of the friction ring 200 is compressed. This reduces the amplitude of stress peaks 41, 42, 43, 44 along the concave shape and also prevents shear movement of the material of the friction ring 200. Both effects further reduce crack formation and crack growth in the material of the friction ring 200. All of the effects listed above distinguish the connecting element 100 from the bolt 10 according to the prior art. This becomes apparent from consideration of the surface pressure 40 on the surface of the connecting element 100.

The surface pressure 40 that occurs is shown in Fig. 2 as a gray area, which is located directly on the circumference of the connecting means 100. The distance of the contour of the gray area reflects an amplitude of the surface pressure 40 of the underlying section of the surface of the connecting means 100. The surface pressure 40 occurring on the connecting means 100, with the same pressure between the connecting means 100 and the friction ring 200 as in Fig. 1, leads to a different distribution of the surface pressure 40 along the contour of the connecting means 100. The average surface pressure 40 on the connecting element 100 is lower than on the bolt 10 according to the prior art. Furthermore, the stress peaks 41, 42, 43, 44 on the surface pressure 40 on the connecting element 100 are lower than on the bolt 10 according to the prior art. All this shows a significant reduction in the risk of crack formation and crack growth in the friction ring 200 through the use of the connecting means 100 compared to the use of the bolt 10 according to the prior art.

The same advantages also apply when the connecting element 100 according to this embodiment is arranged in another object, such as an adapter element 400 of a brake disc 500.

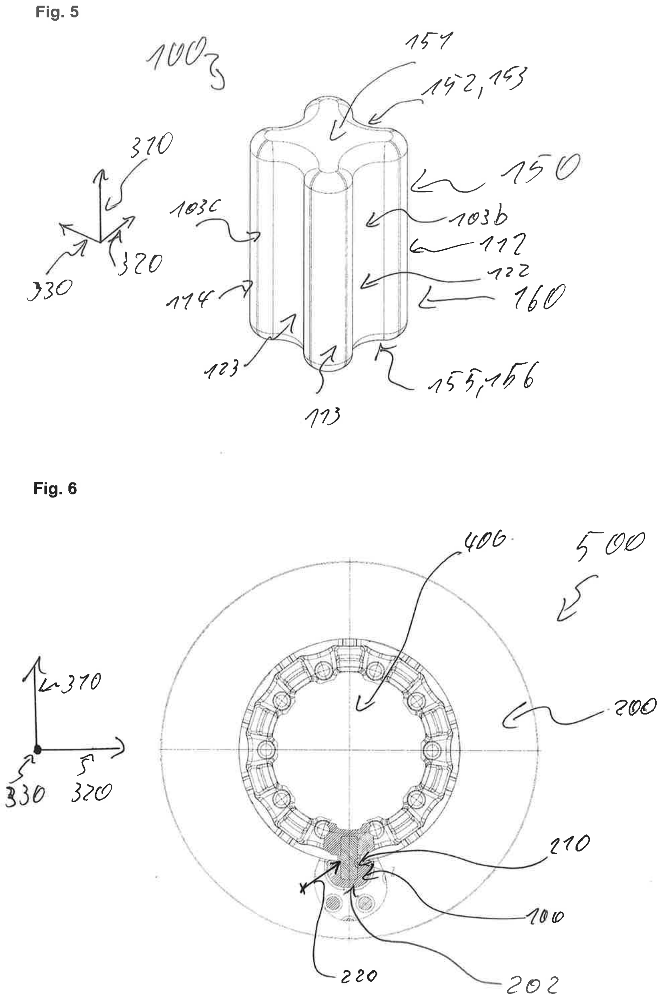

**Figure 5** shows a schematic representation of a connecting means 100 according to a second embodiment of the invention. The connecting means 100 is shown freestanding. The outer cross-sectional contour 105 of the connecting means 100 has a constant cross-section in a first fastening area 161 and in a second fastening area 162 along the main direction of extension 310 of the connecting element 100. In addition, the outer cross-sectional contour 105 has a constant cross-section over the entire length of the connecting means 100 in the main direction of extension 310.

The connecting means 100 has a first insertion curve 152 with a first insertion curve radius 153 at a first end 151 in its main direction of extension 310. In particular, the connecting means 100 has a second insertion curve 155 with a second insertion curve radius 156 at a second end 154 opposite the first end 151 in the main direction of extension 310. In particular, the first insertion radius 153 and the second insertion radius 156 correspond to each other. An advantage of this embodiment may be that it simplifies insertion of the connecting means 100 into the friction ring 200 and/or the adapter element 400.

**Figure 6** shows a schematic representation of the brake disc 500 according to an embodiment of the invention. The brake disc 500 has the friction ring 200, an adapter element 400, and a connecting means 100 according to one of the preceding embodiments. The connecting means 100 is connected to both the friction ring 200 and the adapter element 400 for force transmission. For this purpose, the connecting means 100 is pressed into both the friction ring 200 and the adapter element 400.

A main direction of extension 310 of the connecting element 100 corresponds to a radial direction of the brake disc 500. The first normal 320 of the connecting element 100 corresponds to a tangential direction of the brake disc 200. The second normal 330 of the connecting element 100 is aligned parallel to a rotational axis of the brake disc 500.

The connecting element 100 is aligned in the brake disc 500 such that a direction of rotation of the brake disc 500 during forward travel of a vehicle on which the brake disc 500 is arranged in the brake system is a normal to a concave portion of the first lowering section 121, which is closest to a center of the cross-sectional area of the connecting element 100.

The friction ring 200 has a plurality of connecting recesses 202. The connecting recesses 202 are designed to accommodate the connecting means 100 in the friction ring 200. At least one connecting recess 202 has an insertion section 210; in particular, each connecting recess 202 has an insertion section 210. The insertion section 210 or insertion sections 210 of the friction ring 200 in particular each form the distal end of the connecting recesses 202.

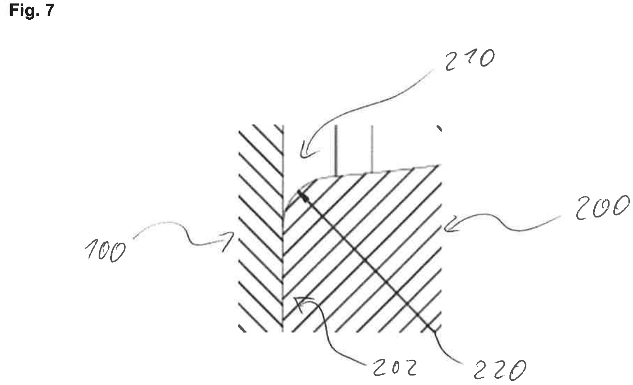

**Figure 7** shows a schematic representation of the insertion section 210 of the friction ring 200 according to one of the embodiments of the invention. The insertion section 210 is designed as an insertion curve with a friction ring curve radius 220. The insertion section 210, in the design as an insertion curve, has a constant friction ring curve radius 220.

### Reference list:

- 10: Bolt
- 20: Surface pressure on the bolt
- 21: First stress peak
- 22: Second stress peak
- 30: Main elongation direction of the bolt
- 31: Tangential direction
- 32: Axial direction
- 40: Surface pressure on the connecting element
- 41: Third stress peak
- 42: Fourth stress peak
- 43: Fifth stress peak
- 44: Sixth stress peak
- 100: Connecting means
- 103a: First receiving section
- 103b: Second receiving section
- 103c: Third receiving section
- 103d: Fourth receiving section
- 105: Outer cross-sectional contour of the connecting element
- 106: First connecting section
- 107: Second connecting section
- 111: First turning section
- 112: Second turning section
- 113: Third turning section
- 114: Fourth turning section
- 121: First lowering section
- 122: Second lowering section
- 123: Third lowering section
- 124: Fourth lowering section
- 131: First turning section radius
- 132: Second turning section radius
- 133: Third turning section radius

- 134: Fourth turning section radius
- 141: First lowering section radius
- 142: Second lowering section radius
- 143: Third lowering section radius
- 144: Fourth lowering section radius
- 151: First end
- 152: First insertion curve
- 153: First insertion curve radius
- 154: Second end
- 155: Second insertion curve
- 156: Second insertion curve radius
- 161: First fastening area
- 162: Second fastening area
- 200: Friction ring
- 201: Prior art friction ring
- 202: Connecting recess
- 210: Insertion section
- 220: Friction ring curve radius
- 310: Main direction of extension
- 320: First normal
- 330: Second normal
- 400: Adapter element
- 500: Brake disc

## Claims

1. Connecting means (100), in particular a bolt (10), for a brake disc (500),
- wherein the connecting means (100) has a main direction of extension (310),
- wherein an outer cross-sectional contour (105) of the connecting means (100) has a receiving section (103a, 103b, 103c, 103d),
- wherein the receiving section (103a, 103b, 103c, 103d) has
- a first turning section (111),
- a second turning section (112), and
- a first lowering section (121),
- wherein the first lowering section (121) is arranged between the first turning section (111) and the second turning section (112), and
- wherein the first lowering section (121) is partially concave in design.

2. . Connecting means (100) according to claim 1, **characterized in that** the first lowering section (121) is directly connected to the first turning section (111) and the second turning section (112).

3. . Connecting means (100) according to any one of the preceding claims, **characterized in that** the first lowering section (121) is completely concave in design.

4. . Connecting means (100) according to any one of the preceding claims, **characterized in that** the first turning section (111) is partially or completely convex in design, and/or the second turning section (112) is partially or completely convex in design.

5. . Connecting means (100) according to any one of the preceding claims, **characterized in that** the first lowering section (121) connects continuously, in particular without a kink, to the first turning section (111), and/or the first lowering section (121) connects continuously, in particular without a kink, to the second turning section (112).

6. . Connecting means (100) according to any one of the preceding claims, **characterized in that** the first lowering section (121) is designed as a partial circle section, in particular as a quarter circle section, and has a first lowering section radius (141).

7. . Connecting means (100) according to any one of the preceding claims, **characterized in that** the first turning section (111) is designed as a partial circle section, in particular as a semicircle section, and has a first turning section radius (131), and/or the second turning section (112) is designed as a partial circle section, in particular as a semicircle section, and has a second turning section radius (132).

8. . Brake disc (500) for a vehicle, in particular a commercial vehicle, having:
- a friction ring (200),
- an adapter element (400), and
- a connecting means (100) according to any one of the preceding claims,
- wherein the friction ring (200) is connected to the adapter element (400) by means of the connecting means (100) in a force-fitting and/or form-fitting and/or material-fitting manner.

9. . Vehicle having a brake disc (500) according to claim 8 and/or a connecting means (100) according to any one of the preceding claims 1 to 7.

10. . Use of a connecting means (100) according to any one of claims 1 to 7 for connecting a friction ring (200) of a brake disc (500) to an adapter element (400) of the brake disc (500).
